# EUROPÄISCHE PATENTSCHRIFT

(11) **EP 1 663 703 B1**
(45) Veröffentlichungstag und Bekanntmachung des Hinweises auf die Patenterteilung: **10.08.2011**
(21) Anmeldenummer: 04764898.5
(22) Anmeldetag: 07.09.2004
(51) Int. Cl.: B60N 2/30, B60N 2/02

(54) **SITZ UND VERFAHREN**
SEAT AND METHOD
SIEGE ET PROCEDE ASSOCIE

(30) Priorität: 09.09.2003 DE 10341375
(43) Veröffentlichungstag der Anmeldung: 07.06.2006
(73) Patentinhaber: Johnson Controls GmbH, 51399 Burscheid (DE)
(72) Erfinder: DEISSMANN, Bernd, 42899 Remscheid (DE); CARO, Hans, Jürgen, 42277 Wuppertal (DE); SZABLEWSKI, Piotr, 42399 Wuppertal (DE)
(74) Vertreter: Wolff, Felix
(86) Internationale Anmeldenummer: PCT/EP2004/009955
(87) Internationale Veröffentlichungsnummer: WO 2005/025931

(56) Entgegenhaltungen:
- EP-A- 0 575 733
- DE-A- 10 056 024
- DE-C- 10 136 244
- DE-C- 10 139 538
- DE-U- 29 715 345
- US-A- 4 484 776

## Beschreibung

Die Erfindung betrifft einen Sitz, insbesondere einen Fahrzeugsitz, nach dem Oberbegriff des Anspruchs 1. Insbesondere für Kraftfahrzeuge ist es zunehmend erforderlich, Komponenten bereitzustellen, die den Komfortbedürfnissen ihrer Benutzer in immer größerem Maße gerecht werden. Bei Sitzen für Kraftfahrzeuge wirkt sich dies dadurch aus, dass beispielsweise als Einstiegshilfe in ein Kraftfahrzeug für Benutzer des Kraftfahrzeuges, die auf der Rücksitzbank eines Kraftfahrzeuges Platz nehmen möchten, die Lehne eines vor der Rücksitzbank befindlichen Sitzes nach vorne, d.h. von der Rücksitzbank weg, geklappt werden soll. Für insbesondere für Familien besonders geeignete Fahrzeuge, besonders sogenannte "Vans" oder "Großraumlimousinen", ist es vorteilhaft, dass weitere Funktionsmöglichkeiten bzw. Positionen von Fahrzeugsitzen möglich sind, beispielsweise kann die Lehne eines solchen Sitzes derart nach vorn geklappt werden, dass die Rückseite der Lehne als Tisch verwendbar ist.

Es ist allgemein bekannt Fahrzeugsitze zu verwenden, die insbesondere in Fahrzeugen, die keine separaten Türen als Zugang für eine Rücksitzbank aufweisen, eine Lehne derart aufweisen, dass zum bequemeren Einstieg von Passagieren auf die Rücksitzbank die Rückenlehne des Fahrzeugsitzes nach vorne geklappt wird. Hierzu wird in der Regel manuell eine mechanische Entriegelungsvorrichtung betätigt, so dass die Lehne, die in ihrer Normalposition in einem bestimmten, einstellbaren Neigungswinkel zur Sitzfläche arretiert vorgesehen ist, nach vorne geklappt werden kann. Hierbei ist es nachteilig, dass der gesamte Sitzunterbau in der gleichen Position verharrt, d.h. an der gleichen Stelle verbleibt, und damit beim Einstieg der Passagiere weiterhin hinderlich ist. Solche Fahrzeugsitze sind beispielsweise aus den Druckschriften DE 101 39 538 C1, DE 297 15 345 U, DE 100 56 024 A, EP 0 575 733 A und DE 101 36 244 C bekannt, wobei hier von einem gattungsgemäβen Sitz aus der DE 101 39 538 C1 ausgegangen wird.

Der Erfindung liegt daher die Aufgabe zugrunde, einen Sitz, insbesondere einen Fahrzeugsitz zu schaffen, der über ein Höchstmaß an Variationsmöglichkeiten hinsichtlich seiner für unterschiedliche Benutzungssituationen vorgesehenen Einstellpositionen verfügt. Darüber hinaus ist erfindungsgemäß vorgesehen, einen Missbrauch der Einstellmöglichkeiten bzw. eine nicht vorgesehene Kombination von Einstellmöglichkeiten zu verhindern.

Diese Aufgabe wird erfindungsgemäß durch einen Sitz gemäß Anspruch 1 gelöst. Hierdurch ergibt sich ein Höchstmaß an Einstellmöglichkeiten, die zu einer Vergrößerung des Bedienungskomforts bei der Benutzung des Sitzes und des Kraftfahrzeuges führt. Weiterhin ist von Vorteil, dass Auslösemittel vorgesehen sind, wobei die Auslösemittel bei in ihrer Klapposition befindlicher Lehne eine Lösung entweder der Diagonalbefestigung oder der zweiten Befestigung lediglich während eines vorgegebenen Zeitintervalls bewirken. Dadurch sind Missbräuche einer Benutzung des Sitzes weiterhin eingeschränkt.

In einer bevorzugten Ausführungsform der Erfindung ist in der Einsteigeposition das Sitzteil im Bereich der zweiten Befestigung vom Sitzunterbau getrennt vorgesehen und/oder es ist in der Versenkposition die Diagonalbefestigung gegenüber ihrer Einstellung in der Normalposition längsverschoben vorgesehen. Hierdurch ergibt sich insbesondere der Vorteil, dass der Ort, an dem sich das Sitzteil in seiner Normaposition befindet, für eine Benutzung durch einen Insassen freigebbar ist. Weiterhin ergibt sich dadurch der Vorteil, dass der Sitz versenkbar vorgesehen ist, d. h. dass selbst bei einem relativ dicken Lehnenteil des Sitzes eine Benutzung der Lehne als Tisch möglich ist, ohne dass ein solcher "Tisch" für eine Benutzung in dem Fahrzeug untauglich, weil beispielsweise zu hoch angeordnet, wäre.

Weiterhin ist es vorteilhaft, dass zur Trennung des Sitzteiles im Bereich der zweiten Befestigung eine zweiter Aktuator vorgesehen ist und/oder dass zur Längsverschiebung der Diagonalbefestigung ein erster Aktuator vorgesehen ist, wobei der erste und/oder der zweite Aktuator insbesondere als elektromotorische Aktuatoren vorgesehen sind. In vorteilhafter Weise wird dadurch bewirkt, dass die Ermöglichung der verschiedenen Einstellmöglichkeiten des Sitzes automatisiert bzw. gesteuert vorgenommen werden kann und somit eine direkte Entriegelung durch einen Benutzer entfällt, was zum einen die Benutzung erleichtert, weil beispielsweise nicht an unzugänglichen Stellen des Sitzes hantiert werden muss, und zum anderen die Konstruktion des Sitzes vereinfacht und damit verbilligt, weil keine unhandlichen und gewichtsverursachenden Griffe, Hebel oder sonstige Betätigungsvorrichtungen vorgesehen sein müssen.

Weiterhin ist von Vorteil, dass erste Überwachungsmittel vorgesehen sind, wobei die ersten Überwachungsmittel eine Verhinderung der Lösung der Diagonalbefestigung in der Einsteigeposition bewirken und/oder das zweite Überwachungsmittel vorgesehen sind, aber wobei die zweiten Überwachungsmittel eine Verhinderung der Lösung der zweiten Befestigung in der Versenkposition bewirken. Dadurch ist es erfindunsgemäß vorteilhaft möglich, dass ein Mißbrauch der verschiedenen Verstellmöglichkeiten des Sitzes durch eine unsachgemäße Benutzung weitgehend ausgeschlossen ist.

Weiterhin ist von Vorteil, dass die ersten Überwachungsmittel und/oder die zweiten Überwachungsmittel und/oder die Auslösemittel als Mikroschalter vorgesehen sind. Hierdurch ist es in besonders einfacher und kostengünstiger Weise möglich, die erfindungsgemäßen Überwachungsmittel an einem Sitz bereitzustellen.

Weiterhin ist von Vorteil, dass der Sitz eine Steuerungseinrichtung zur Steuerung der Lösung der Befestigungen in Abhängigkeit der von dem Sitz eingenommenen Position aufweist. Durch die Realisierung der Steuerungseinrichtung, beispielsweise als programmierbare Steuerungseinrichtung, ist es erfindungsgemäß in einfacher Weise möglich, einen Mißbrauch der verschiedenen Verstellmöglichkeiten des erfindungsgemäßen Sitzes auszuschließen.

Ein weiterer Gegenstand der vorliegenden Erfindung ist ein Verfahren, bei dem ein erfindungsgemäßer Sitz derart gesteuert wird, dass er über ein Höchstmaß an vom

Benutzer wählbaren Einstellmöglichkeiten verfügt und gleichzeitig ein Mißbrauch dieser erhöhten Funktionalität in starkem Maße eingeschränkt ist.

Die Erfindung wird nachfolgend anhand von in der Zeichnung dargestellten Ausführungsbeispielen näher erläutert.

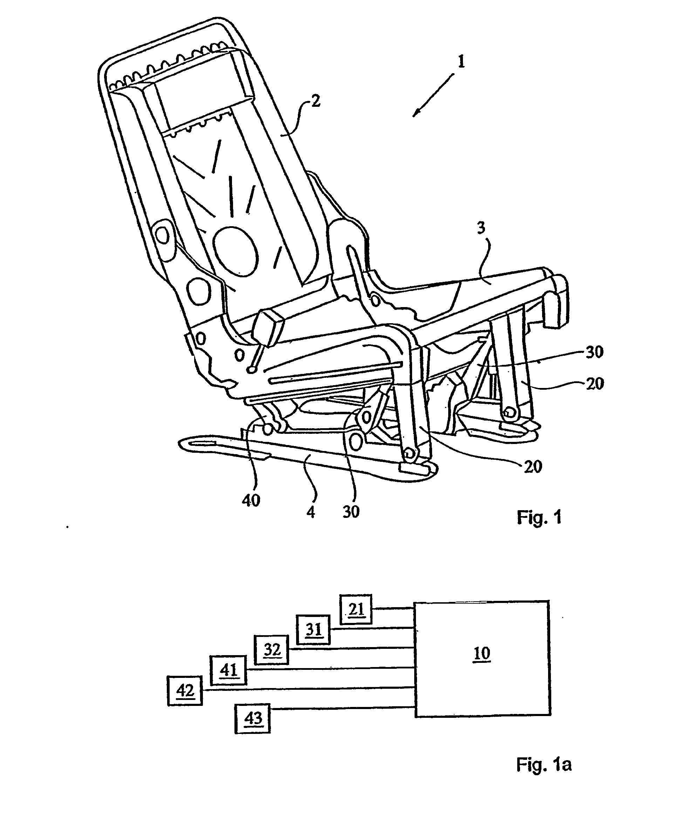

- **Figur 1**: zeigt einen erfindungsgemäßen Sitz mit einem Lehnenteil und einem Sitzteil.
- **Figur 1 a**: ist schematisch eine Steuerung.
- **Figur 2**: zeigt verschiedene Komponenten des erfindungsgemäßen Sitzes in einer vergrößerten Darstellung.
- **Figur 3**: zeigt einen Ausschnitt eines Seitenteils des Sitzteils 3 mit angebrachten Auslösemitteln.
- **Figur 4**: zeigt die Diagonalbefestigung.
- **Figur 5**: zeigt die zweite Befestigung.
- **Figur 6a bis 6g**: zeigen eine Abfolge von Positionen des erfindungsgemäßen Sitzes mit Bezug auf die Einsteigeposition.
- **Figur 7a bis 7g**: zeigen eine Abfolge von Positionen des erfindungsgemäßen Sitzes mit Bezug auf die Versenkposition.
- **Figur 8a bis 8d**: zeigt eine erste Abfolge von teilweise missbräuchlichen Positionen eines Sitzes.
- **Figur 9**: zeigt das in Figur 8 dargestellte Überwachungsprinzip anhand eines Logikdiagramms.
- **Figur 10a bis 10d**: zeigt eine zweite Abfolge von teilweise missbräuchlichen Positionen eines Sitzes.
- **Figur 11**: zeigt das in Figur 10 dargestellte Überwachungsprinzip anhand eines Logikdiagramms.

**Figur 1** zeigt einen erfindungsgemäßen Fahrzeugsitz 1 bzw. Sitz 1 mit einem Lehnenteil 2 und einem Sitzteil 3, wobei das Sitzteil 3 mit einem Sitzunterbau 4 über einen vordere erste Befestigung 20, eine hintere zweite Befestigung 40 und eine Diagonalbefestigung 30 verbunden ist. Der Sitz 1 ist erfindungsgemäß insbesondere weitgehend symmetrisch bezüglich seiner Längsachse vorgesehen, so dass in einer vorteilhaften Ausführungsform des Sitzes 1 sowohl die vordere erste Befestigung 20 als auch die zweite Befestigung 40 und die Diagonalbefestigung 30 sowohl auf der linken Seite als auch auf der rechten Seite des Sitzes 1 vorgesehen sind. Im folgenden wird jedoch ohne Differenzierung der beiden Seiten des Sitzes 1 von den Befestigungen 20, 30 und 40 in der Einzahl gesprochen, wobei jedoch jeweils beide Seiten einer jeweiligen Befestigung 20, 30 und 40 gemeint sind.

In **Figur 1a** ist schematisch die Steuerung 10 dargestellt, die mit einem Auslösemittel 21, einem ersten Überwachungsmittel 31, einem ersten Aktuator 32, einem zweiten Überwachungsmittel 41, einem zweiten Aktuator 42 und einem Betätigungsmittel 43 verbunden ist. Mittels der Steuerung 10 werden die Aktuatoren 32, 42 der zweiten Befestigung 40 bzw. der Diagonalbefestigung 30 in Abhängigkeit der Zustände des Auslösemittels 21 und der Überwachungsmittel 31, 41 und des Betätigungsmittels 43, d.h. in Abhängigkeit insbesondere des bestehenden Ver- und/oder Entriegelungszustandes des Sitzes, gesteuert.

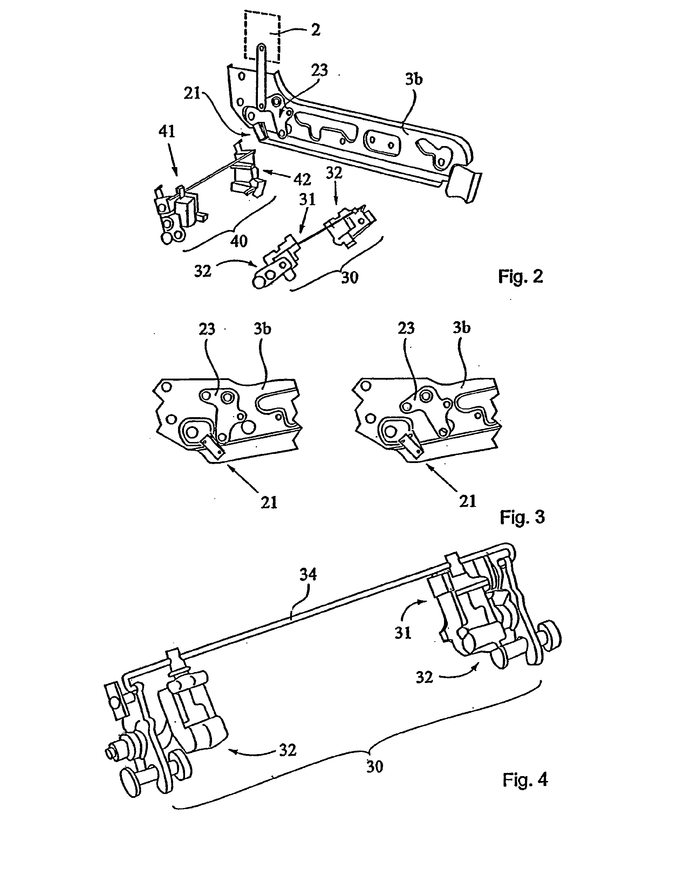

In **Figur 2** sind verschiedene Komponenten des erfindungsgemäßen Sitzes in einer vergrößerten Darstellung, die explosionsartig vergrößert ist, dargestellt. Von dem nicht vollständig dargestellten Sitzteil 3 ist lediglich ein seitlicher Rahmen 3b dargestellt, an dem das Auslösemittel 21 erkennbar ist. Weiterhin sind die zweite Befestigung 40 und die Diagonalbefestigung 30 mit ihren Einzelteilen dargestellt. Die zweite Befestigung 40 umfasst den zweiten Aktuator 42 und die zweiten Überwachungsmittel 41. Die Diagonalbefestigung 30 umfasst den ersten Aktuator 32 und die ersten Überwachungsmittel 31. Angedeutet ist weiterhin ein mit dem Lehnenteil 2 verbundenes Betätigungsteil 23, das durch eine Bewegung des Lehnenteils 2 bewegt wird und bei nach vorne geklapptem Lehnenteil 2 das Auslösemittel 21 betätigt.

In **Figur 3** ist ein Ausschnitt des Seitenteils 3b des Sitzteils 3 mit angebrachten Auslösemittel 21 dargestellt, wobei in einem linken Teil der Figur 3 das in Abhängigkeit der Position der Lehne bzw. des Lehnenteils 2 sich bewegende Betätigungsteil 23 mit dem Auslösemittel 21 derart zusammen wirkt, dass das Auslösemittel 21 ein Nachvorneklappen des Lehnenteils 2 in seine Klapposition signalisiert. Im rechten Teil der Figur 3 ist das Betätigungsteil 23 entsprechend der Normalposition des Lehnenteils 2 vorgesehen, so dass das Betätigungsteil 23 nicht mit dem Auslösemittel 21 zusammenwirkt und die Klapposition des Lehnenteils 2 signalisiert.

In **Figur 4** ist die Diagonalbefestigung 30 mit ihrem ersten Aktuator 32, ihrem ersten Überwachungsmittel 31 und einem Verstellbügel 34 dargestellt, auf den der erste Aktuator 32 einwirkt. Beim Einwirken des ersten Aktuators 32 auf den Verstellbügel 34 der Diagonalbefestigung 30 ist die Diagonalbefestigung 30 gelöst und kann erfindungsgemäß insbesondere längs verschoben werden.

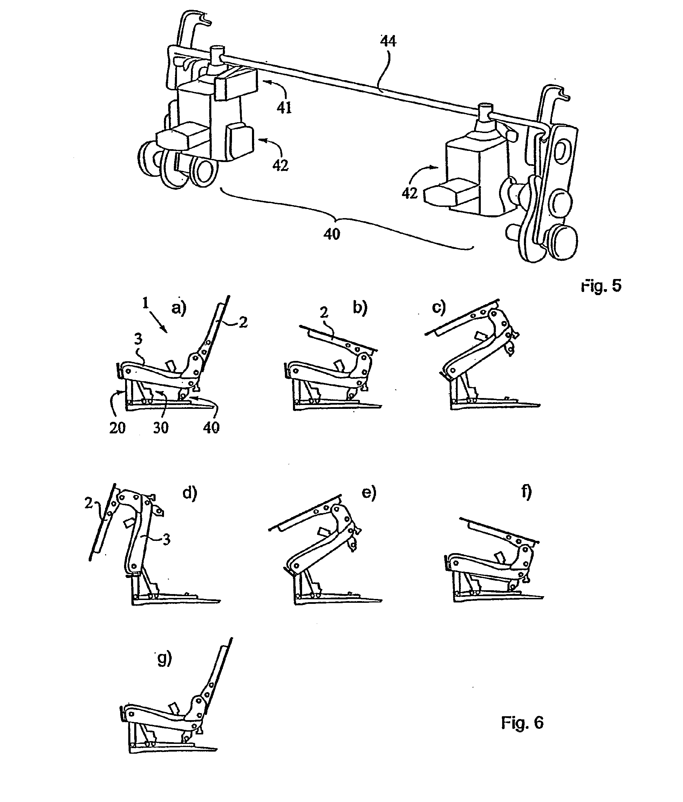

In **Figur 5** ist die zweite Befestigung 40 dargestellt, wobei die zweite Befestigung 40 den zweiten Aktuator 42, das zweite Überwachungsmittel 41 und ebenfalls einen Verstellbügel 44 umfasst, auf den - analog zur Diagonalbefestigung 30 - der zweite Aktuator 42 wirkt. Bei Einwirkung des zweiten Aktuators 42 auf den Verstellbügel 44 der zweiten Befestigung 40 ist die zweite Befestigung 40 gelöst und kann insbesondere den Sitzteil 3 relativ zu dem Sitzunterbau 4 freigeben, so dass der Sitz 1 bzw. das Lehnenteil 2 zusammen mit dem Sitzteil 3 um die vordere erste Befestigung 20 herum, bzw. um eine Drehachse im Bereich der vorderen ersten Befestigung 20 drehbar vorgesehen ist.

In **Figur 6a bis Figur 6g** ist eine Abfolge von Positionen des erfindungsgemäßen Sitzes 1 dargestellt, um die Einstellung des Sitzes 1 von seiner Normalposition in seine Einsteigeposition und zurück in seine Normalposition zu illustrieren. Auf die Bezeichnung der verschiedenen Komponenten des Sitzes in jedem Fall dieser Teilfiguren wurde der Einfachheit halber verzichtet. In **Figur 6a** ist der Sitz 1 in seiner Normalposition dargestellt. Der Sitz 1 ist in **Figur 6b** mit nach vorne geklapptem Lehnenteil 2 dargestellt. Durch das Nachvorneklappen des Lehnenteils 2 wird das Auslösemittel 21 aktiviert, so dass der zweite Aktuator 42 eine Freigabe des Sitzteils 3 im Bereich der zweiten Befestigung 40 vorsehen kann, was in **Figur 6c** dargestellt ist. In **Figur 6d** ist die Einsteigeposition des Sitzes 1 dargestellt. Sichtbar ist, dass an der Stelle, an der sich in der Normalposition das Sitzteil 3 befindet, ausreichend Platz zur Verfügung steht, um beispielsweise einem Benutzer den Einstieg in ein Kraftfahrzeug bequem zu ermöglichen. In **Figur 6e** ist die Bewegung des Sitzes 1 bzw. seines Lehnenteils 2 und seines Sitzteils 3 zurück in die Normalposition dargestellt, wobei in **Figur 6f** eine Einrastung der zweiten Befestigung 40 erfolgt, so dass das Sitzteil 3 wiederum fest mit dem Sitzunterbau 4 verbunden ist. In **Figur 6g** ist der Sitz 1 in seiner Normalposition dargestellt.

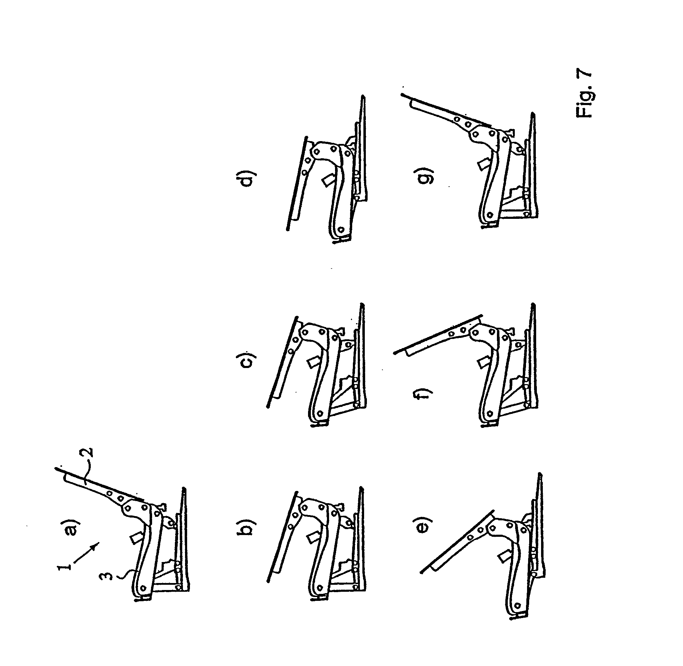

In **Figur 7a bis Figur 7g** ist eine Abfolge von Positionen des erfindungsgemäßen Sitzes 1 dargestellt, um die Einstellung des Sitzes 1 von seiner Normalposition in seine Versenkposition und zurück in seine Normalposition zu illustrieren. Auf die Bezeichnung der verschiedenen Komponenten des Sitzes in jedem Fall dieser Teilfiguren wurde der Einfachheit halber verzichtet. In **Figur 7a** ist der Sitz 1 in seiner Normalposition dargestellt. Erfindungsgemäß ist es vorgesehen, dass ein Benutzer mittels des mit der Steuerung 10 verbundenen Betätigungsmittels 43, das jedoch in den Figuren - außer schematisch in Figur 1a - nicht dargestellt ist, die Einstellung der Versenkposition einleiten kann. Hierzu betätigt der Benutzer das Betätigungsmittel 43, beispielsweise ein Taster, Touchscreen oder der gleichen, wodurch der Steuerung 10 signalisiert wird, dass der Benutzer den Sitz 1 in die Versenkposition einzustellen beabsichtigt. Durch die Betätigung des Betätigungsmittels 43 kann daher zwischen dem Benutzerwunsch der Einstellung des Sitzes in die Einsteigeposition und in die Versenkposition unterschieden werden. Der Sitz 1 ist in **Figur 7b** mit nach vorne geklapptem Lehnenteil 2 dargestellt. Durch das Nachvorneklappen des Lehnenteils 2 wird das Auslösemittel 21 aktiviert, so dass - wegen der zuvor erfolgten Betätigung des Betätigungsmittels 43 - der erste Aktuator 32 eine Längsverschiebung der Diagonalbefestigung 30 ermöglichen kann, deren Beginn in **Figur 7c** dargestellt ist und deren vollständige Verschiebung in **Figur 7d** dargestellt ist. Die **Figur 7d** stellt gleichzeitig die Versenkposition des Sitzes 1 dar. Das durch die erste Befestigung 20 und die zweite Befestigung 40 gebildete "Parallelogramm" wird durch eine eingerastete, d.h. arretierte, Diagonalbefestigung 30 in der Normalposition des Sitzes 1 erhalten. Bei der Versenkposition des Sitzes 1 ist es nun so, dass durch die Entriegelung der Diagonalbefestigung 30 eine Längsverschiebung derselben möglich ist, was - mit entsprechender manueller Bedienung eines Benutzers - zu einem "Zusammenklappen" des Parallelogramms führt. In **Figur 7e** ist die Bewegung des Sitzes 1 bzw. seines Lehnenteils 2 und seines Sitzteils 3 zurück in die Normalposition dargestellt, wobei in **Figur 7f** wiederum eine Längsverschiebung des Diagonalteils stattfindet, die in **Figur 7g** zu einer Einrastung der Diagonalbefestigung 30 in einer der Normalposition des Sitzes 1 entsprechenden Länge führt.

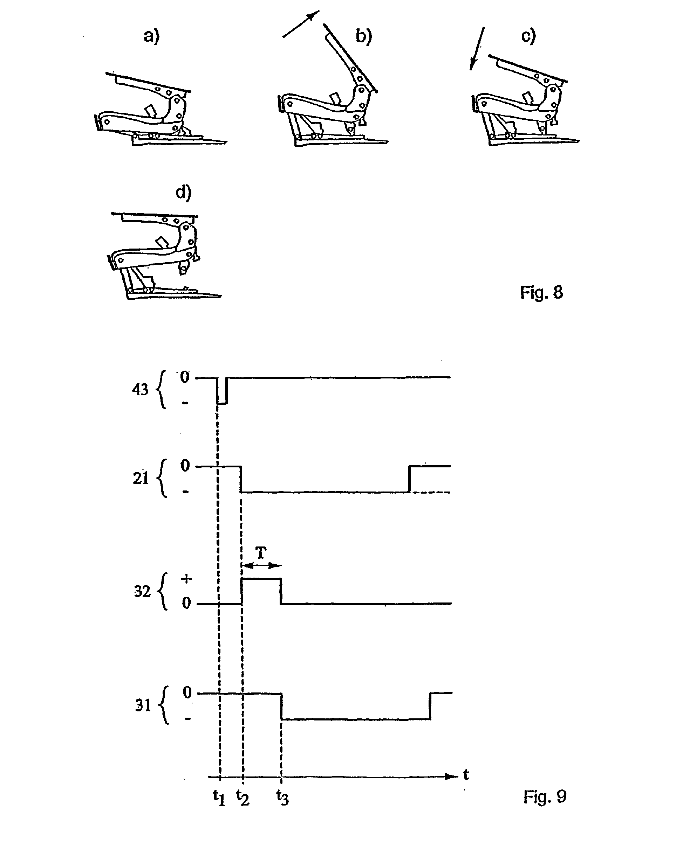

In **Figur 8a bis Figur 8d** ist eine erste Abfolge von Positionen eines Sitzes dargestellt, um die Einstellung des Sitzes von der Versenkposition in eine unerlaubte und die großen Einstellmöglichkeiten eines Sitzes missbrauchende Position zu illustrieren. In der in **Figur 8a** dargestellten Versenkposition des Sitzes 1 ist die Diagonalbefestigung 30 längsverschoben eingestellt. Falls in dieser Situation das Lehnenteil 2 aufgerichtet (vgl. **Figur 8b**) wird - wobei das Auslösemittel 21 ausgeschaltet wird - und nachfolgend wieder in seine Klappposition eingestellt (vgl. **Figur 8c**) wird - das Auslösemittel 21 wird durch das Betätigungsteil 23 wieder betätigt und es wird von der Steuerung 10 eine Entriegelung bzw. eine Lösung der zweiten Befestigung 40 eingeleitet -, ist es möglich, dass durch die Lösung der zweiten Befestigung 40 (vgl. Figur 8d) ein Nachvorneklappen des Sitzes 1 um eine im Bereich der ersten Befestigung 20 liegende Drehachse trotz der in der Versenkposition natürlich nicht arretierten Diagonalbefestigung 30 denkbar ist. Ein solcher Missbrauch der Einstellmöglichkeiten wird erfindungsgemäß dadurch verhindert, dass an der Diagonalbefestigung 30 die ersten Überwachungsmittel 31 angebracht sind, die durch die Lösung der Diagonalbefestigung 30 in der Versenkposition betätigt sind und bei ihrer Betätigung eine Lösung der zweiten Befestigung, d.h. eine Ansteuerung des zweiten Aktuators 42, verhindern.

In **Figur 9** ist das in Figur 8 dargestellte Überwachungsprinzip zur Verhinderung des dargestellten Missbrauchs bei einem erfindungsgemäßen Sitz 1 nochmals anhand eines Logikdiagramms dargestellt. In Figur 9 sind vier Zeilen angegeben, die Zustände verschiedener Komponenten des erfindungsgemäßen Sitzes 1 darstellen. Jede Zeile stellt den zeitlichen Verlauf t des Zustandes der jeweiligen Komponente dar. Die Bezeichnung "0" bedeutet, dabei, dass die entsprechende Komponente inaktiv bzw. nicht betätigt ist. Die erste Zeile betrifft das Betätigungsmittel 43, die zweite Zeile betrifft das Auslösemittel 21, die dritte Zeile betrifft den ersten Aktuator 32 und die vierte Zeile betrifft das erste Überwachungsmittel 31. In einem ersten Zeitpunkt t1 wird das Betätigungsmittel 43 durch eine Benutzerbetätigung aktiviert. In der Folge wird das Lehnenteil 2 in seine Klappposition eingestellt. Wenn die Klappposition erreicht ist, wird dadurch (vermittels des Betätigungsteils 23) das Auslösemittel 21 aktiviert, was beim zweiten Zeitpunkt t2 der Fall ist. Durch die Betätigung des Auslösemittels 21 aktiviert die Steuerung 10 während eines vorgegebenen Zeitintervalls T von beispielsweise 500 ms den ersten Aktuator 32, um die Erreichung der Versenkposition zu ermöglichen. Wenn der erste Aktuator 32 den Verstellbügel 34 der Diagonalbefestigung 30 gelöst hat, wird im dritten Zeitpunkt t3 das erste Überwachungsmittel 31 aktiviert. Die Steuerung ist 10 nun erfindungsgemäß derart vorgesehen, dass eine nachfolgende Aktivierung des zweiten Aktuators 42 solange unterbleibt, solange das erste Überwachungsmittel eine Entriegelung der Diagonalbefestigung 30 signalisiert und dies auch für den Fall, dass das Auslösemittel 21 - ggf. durch in der Figur 8 dargestellte Verstellvorgänge des Lehnenteils 2 - erneut betätigt wird und prinzipiell eine Freigabe der zweiten Befestigung 40 durch Aktivierung des zweiten Aktuators 42 bewirken könnte.

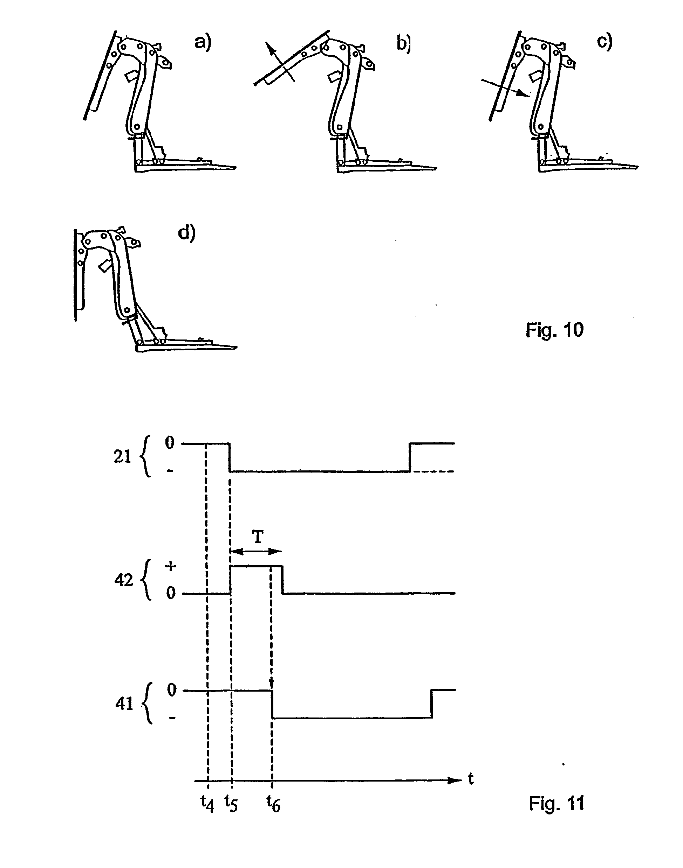

In **Figur 10a bis Figur 10d** ist eine zweite Abfolge von Positionen eines Sitzes dargestellt, um die Einstellung des Sitzes von der Einsteigeposition in eine unerlaubte und die großen Einstellmöglichkeiten eines Sitzes missbrauchende Position zu illustrieren. In der in **Figur 10a** dargestellten Einsteigeposition des Sitzes 1 ist die zweite Befestigung 40 gelöst vorgesehen, d.h. das Lehnenteil 2 und das Sitzteil 3 können um eine im Bereich der ersten Befestigung 20 liegende Drehachse nach vorne geklappt werden. Falls in dieser Situation das Lehnenteil 2 aufgerichtet (vgl. **Figur 10b**) wird - wobei das Auslösemittel 21 ausgeschaltet wird - und nachfolgend wieder in seine Klappposition eingestellt (vgl. **Figur 10c**) wird - das Auslösemittel 21 wird durch das Betätigungsteil 23 wieder betätigt und es wird von der Steuerung 10 eine Entriegelung bzw. eine Lösung der Diagonalbefestigung 30 eingeleitet-, ist es möglich, dass durch die Lösung der Diagonalbefestigung 30 (vgl. **Figur 10d**) eine Längsverschiebung der Diagonalbefestigung 30 trotz der in der Einsteigeposition natürlich nicht befestigten zweiten Befestigung 40 denkbar ist. Ein solcher Missbrauch der Einstellmöglichkeiten wird erfindungsgemäß dadurch verhindert, dass an der zweiten Befestigung 40 die zweiten Überwachungsmittel 41 angebracht sind, die durch die Lösung der zweiten Befestigung 40 in der Einsteigeposition betätigt sind und bei ihrer Betätigung eine Lösung der Diagonalbefestigung 30, d.h. eine Ansteuerung des ersten Aktuators 32, verhindern.

In **Figur 11** ist das in Figur 10 dargestellte Überwachungsprinzip zur Verhinderung des dargestellten Missbrauchs bei einem erfindungsgemäßen Sitz 1 nochmals anhand eines Logikdiagramms dargestellt. In Figur 11 sind drei Zeilen angegeben, die Zustände verschiedener Komponenten des erfindungsgemäßen Sitzes 1 darstellen. Jede Zeile stellt den zeitlichen Verlauf t des Zustandes der jeweiligen Komponente dar. Die Bezeichnung "0" bedeutet, dabei, dass die entsprechende Komponente inaktiv bzw. nicht betätigt ist. Die erste Zeile betrifft das Auslösemittel 21, die zweite Zeile betrifft den zweiten Aktuator 42 und die dritte Zeile betrifft das zweite Überwachungsmittel 41. In einem vierten Zeitpunkt t4 wird durch eine mechanische Entriegelung der Arretierung des Lehnenteils 2 die Lehne verstellt. In der Folge wird das Lehnenteil 2 in seine Klappposition eingestellt. Wenn die Klappposition erreicht ist, wird dadurch (vermittels des Betätigungsteils 23) das Auslösemittel 21 aktiviert, was beim fünften Zeitpunkt t5 der Fall ist. Durch die Betätigung des Auslösemittels 21 aktiviert die Steuerung 10 während eines vorgegebenen Zeitintervalls T von beispielsweise 500 ms den zweiten Aktuator 42, um die Erreichung der Einsteigeposition zu ermöglichen. Wenn der zweite Aktuator 42 den Verstellbügel 44 der zweiten Befestigung 40 gelöst hat, wird im sechten Zeitpunkt t6 das zweite Überwachungsmittel 41 aktiviert. Die Steuerung ist 10 nun erfindungsgemäß derart vorgesehen, dass eine nachfolgende Aktivierung des ersten Aktuators 32 solange unterbleibt, solange das zweite Überwachungsmittel 41 eine Entriegelung der zweiten Befestigung 40 signalisiert und dies auch für den Fall, dass das Auslösemittel 21 - ggf. durch in der Figur 10 dargestellte Verstellvorgänge des Lehnenteils 2 - erneut betätigt wird und prinzipiell eine Freigabe der Diagonalbefestigung 30 durch Aktivierung des ersten Aktuators 32 bewirken könnte.

Das Auslösemittel 21 und die Überwachungsmittel 31, 41 sind erfindungsgemäß insbesondere als Kontaktschalter bzw. als Mikroschalter vorgesehen, die mechanisch durch die Bewegung von bestimmten Komponenten geschaltet werden. Stellvertretend für diese Komponenten steht das Betätigungsteil 23 zur Betätigung des Auslösemittels 21. Hierbei kann es erfindungsgemäß insbesondere vorgesehen sein, dass ein Teil der Auslöse- bzw. Überwachungsmittel 21, 31, 41 eine Überwachung des Zustandes durchführen, während andere eine Überwachung von Änderungen durchführen. Beispielsweise ist es erfindungsgemäß vorgesehen, dass das Auslösemittel 21 auf "Flanken" reagiert bzw. von der Steuerungseinrichtung 10 auf "Flanken" seines Signals hin ausgewertet wird, währenddem das erste und zweite Überwachungsmittel 31, 41 lediglich auf detektierte bzw. eingenommene Zustände reagiert, d.h. von der Steuerungseinrichtung 10 ausschließlich auf momentane Signale hin ausgewertet werden. Aus dem letzteren ergibt sich der Vorteil, dass die Auswertung der Überwachungsmittel 31, 41 unabhängig von der Bewegungshistorie des Sitzes ist und somit eine erhöhte Robustheit des Systems beispielsweise bei Stromausfällen gegeben ist.

Die Unterscheidung zwischen der Einstellung der Versenkposition oder der Einsteigeposition ausgehend von der Normalposition kann auch dadurch geschehen, dass ein nicht dargestellter Wählschalter vorgesehen ist, dessen eine Einstellmöglichkeit für die Einstellung der Versenkposition steht und dessen andere Einstellmöglichkeit für die Einstellung der Einsteigeposition steht. Dadurch kann ein Benutzer des erfindungsgemäßen Sitzes diese beiden Position eindeutig und separat einstellen bzw. deren Einstellung einleiten.

### Bezugszeichenliste:

- 1: Sitz
- 2: Lehnenteil
- 3: Sitzteil
- 3b: Seitenteil des Sitzteils
- 4: Sitzunterbau
- 10: Steuerung
- 20: erste Befestigung
- 21: Auslösemittel
- 30: Diagonalbefestigung
- 31: erstes Überwachungsmittel
- 32: erster Aktuator
- 34: Verstellbügel der Diagonalbefestigung
- 40: zweite Befestigung
- 41: zweites Überwachungsmittel
- 42: zweiter Aktuator
- 43: Betätigungsmittel
- 44: Verstellbügel der zweiten Befestigung
- t: zeitlicher Verlauf
- t1: erster Zeitpunkt
- t2: zweiter Zeitpunkt
- t3: dritter Zeitpunkt
- t4: vierter Zeitpunkt
- t5: fünfter Zeitpunkt
- t6: sechter Zeitpunkt
- T: Zeitintervall

## Patentansprüche

1. Sitz (1), insbesondere Kraftfahrzeugsitz, mit einem Lehnenteil (2) und mit einem Sitzteil (3), wobei das Lehnenteil (2) relativ zum Sitzteil (3) von einer Normalposition in eine Klappposition und umgekehrt klappbar vorgesehen ist, wobei der Sitz (1) einen Sitzunterbau (4) aufweist, wobei das Sitzteil (3) relativ zum Sitzunterbau (4) beweglich vorgesehen ist, wobei zur Befestigung des Sitzteils (3) mit dem Sitzunterbau (4) wenigstens eine vordere erste Befestigung (20), eine hintere zweite Befestigung (40) und eine Diagonalbefestigung (30) vorgesehen sind, wobei der Sitz (1) außer in eine Normalposition wenigstens in eine Einsteigeposition und in eine Versenkposition verstellbar vorgesehen ist, wobei die zweite Befestigung (40) in der Einsteigeposition gelöst vorgesehen ist und wobei die Diagonalbefestigung (30) in der Versenkposition gelöst vorgesehen ist, **dadurch gekennzeichnet, dass** Auslösemittel (21) vorgesehen sind, wobei die Auslösemittel (21) bei in ihrer Klappposition befindlicher Lehne (2) eine Lösung entweder der Diagonalbefestigung (30) oder der zweiten Befestigung (40) lediglich während eines vorgegebenen Zeitintervalls (T) bewirken.

2. Sitz (1) nach Anspruch 1, **dadurch gekennzeichnet, dass** in der Einsteigeposition das Sitzteil (3) im Bereich der zweiten Befestigung (40) vom Sitzunterbau (4) getrennt vorgesehen ist und/oder dass in der Versenkposition die Diagonalbefestigung (30) gegenüber ihrer Einstellung in der Normalposition längsverschoben vorgesehen ist.

3. Sitz (1) nach einem der vorhergehenden Ansprüche, **dadurch gekennzeichnet, dass** zur Trennung des Sitzteils (3) im Bereich der zweiten Befestigung (40) ein zweiter Aktuator (42) vorgesehen ist und/oder dass zur Längsverschiebung der Diagonalbefestigung (30) ein erster Aktuator (32) vorgesehen ist, wobei der erste und/oder zweite Aktuator (32, 42) insbesondere als elektromotorische Aktuatoren vorgesehen sind.

4. Sitz (1) nach einem der vorhergehenden Ansprüche, **dadurch gekennzeichnet, dass** erste Überwachungsmittel (31) vorgesehen sind, wobei die ersten Überwachungsmittel eine Verhinderung der Lösung der Diagonalbefestigung (30) in der Einsteigeposition bewirken und/oder dass zweite Überwachungsmittel (41) vorgesehen sind, wobei die zweiten Überwachungsmittel (41) eine Verhinderung der Lösung der zweiten Befestigung (40) in der Versenkposition bewirken.

5. Sitz (1) nach Anspruch 4, **dadurch gekennzeichnet, dass** die ersten Überwachungsmittel (31) und/oder die zweiten Überwachungsmittel (41) und/oder die Auslösemittel (21) als Mikroschalter vorgesehen sind.

6. Sitz (1) nach einem der vorhergehenden Ansprüche, **dadurch gekennzeichnet, dass** der Sitz (1) eine Steuerungseinrichtung (10) zur Steuerung der Lösung der Befestigungen (20, 30, 40) in Abhängigkeit des bestehenden Ver- und/oder Entriegelungszustandes aufweist.

## Claims

1. Seat (1), in particular a motor vehicle seat, with a backrest part (2) and with a seat part (3), the backrest part (2) being provided in a manner such that it can be folded relative to the seat part (3) from a normal position into a folded position and vice-versa, the seat (1) having a lower seat structure (4), the seat part (3) being provided in a manner such that it is movable relative to the lower seat structure (4), wherein, in order to fasten the seat part (3) to the lower seat structure (4), at least one front first fastening (20), one rear second fastening (40) and one diagonal fastening (30) are provided, the seat (1) being provided in a manner such that it can be adjusted at least into an entry position and into a lowered position apart from into a normal position, the second fastening (40) being provided in a manner such that it is released in the entry position, and the diagonal fastening (30) being provided in a manner such that it is released in the lowered position, **characterized in that** triggering means (21) are provided, the triggering means (21), with the backrest (2) in its folded position, leading either to the diagonal fastening (30) or the second fastening (40) being released only during a predetermined time interval (T).

2. Seat (1) according to Claim 1, **characterized in that** in the entry position the seat part (3) is provided in a manner such that it is separated in the region of the second fastening (40) from the lower seat structure (4) and/or **in that** in the lowered position the diagonal fastening (30) is provided in a manner such that it is displaced longitudinally in relation to its setting in the normal position.

3. Seat (1) according to one of the preceding claims, **characterized in that**, in order to separate the seat part (3) in the region of the second fastening (40), a second actuator (42) is provided, and/or **in that**, in order to longitudinally displace the diagonal fastening (30), a first actuator (32) is provided, the first and/or second actuator(s) (32, 42) being provided in particular as electric motor actuators.

4. Seat (1) according to one of the preceding claims, **characterized in that** first monitoring means (31) are provided, the first monitoring means leading to the diagonal fastening (30) being prevented from being released in the entry position, and/or in that second monitoring means (41) are provided, the second monitoring means (41) leading to the second fastening (40) being prevented from being released in the lowered position.

5. Seat (1) according to Claim 4, **characterized in that** the first monitoring means (31) and/or the second monitoring means (41) and/or the triggering means (21) are provided as microswitches.

6. Seat (1) according to one of the preceding claims, **characterized in that** the seat (1) has a control device (10) for controlling the release of the fastenings (20, 30, 40) as a function of the existing locking and/or unlocking state.

## Revendications

1. Siège (1), en particulier siège de véhicule automobile, avec une partie de dossier (2) et avec une partie d'assise (3), dans lequel il est prévu que la partie de dossier (2) puisse se rabattre d'une position normale à une position rabattue et inversement par rapport à la partie d'assise (3), dans lequel le siège (1) présente une infrastructure de siège (4), dans lequel il est prévu que la partie d'assise (3) soit mobile par rapport à l'infrastructure de siège (4), dans lequel il est prévu, pour la fixation de la partie d'assise (3) à l'infrastructure de siège (4), au moins une première fixation antérieure (20), une deuxième fixation postérieure (40) et une fixation diagonale (30), dans lequel il est prévu que le siège (1) soit réglable dans au moins une position d'embarquement et dans une position d'escamotage, en plus d'une position normale, dans lequel il est prévu que la deuxième fixation (40) soit débloquée dans la position d'embarquement et dans lequel il est prévu que la fixation diagonale (30) soit débloquée dans la position d'escamotage, **caractérisé en ce qu'**il est prévu des moyens de déblocage (21), dans lequel les moyens de déblocage (21) provoquent, lorsque le dossier (2) se trouve dans sa position rabattue, un déblocage soit de la fixation diagonale (30) soit de la deuxième fixation (40) uniquement pendant un intervalle de temps prédéterminé (T).

2. Siège (1) selon la revendication 1, **caractérisé en ce qu'**il est prévu que, dans la position d'embarquement, la partie d'assise (3) soit séparée de l'infrastructure de siège (4) dans la région de la deuxième fixation (40) et/ou que, dans la position d'escamotage, la fixation diagonale (30) soit déplacée longitudinalement par rapport à son réglage dans la position normale.

3. Siège (1) selon l'une quelconque des revendications précédentes, **caractérisé en ce qu'**il est prévu un deuxième actionneur (42) pour la séparation de la partie d'assise (3) dans la région de la deuxième fixation (40) et/ou **en ce qu'**il est prévu un premier actionneur (32) pour le déplacement longitudinal de la fixation diagonale (30), dans lequel le premier et/ou le deuxième actionneur (32, 42) sont prévus en particulier sous la forme d'actionneurs à moteur électrique.

4. Siège (1) selon l'une quelconque des revendications précédentes, **caractérisé en ce qu'**il est prévu des premiers moyens de surveillance (31), dans lequel les premiers moyens de surveillance provoquent un empêchement de déblocage de la fixation diagonale (30) dans la position d'embarquement et/ou **en ce qu'**il est prévu des deuxièmes moyens de surveillance (41), dans lequel les deuxièmes moyens de surveillance (41) provoquent un empêchement de déblocage de la deuxième fixation (40) dans la position d'escamotage.

5. Siège (1) selon la revendication 4, **caractérisé en ce que** les premiers moyens de surveillance (31) et/ou les deuxièmes moyens de surveillance (41) et/ou les moyens de déblocage (21) sont prévus sous la forme de micro-interrupteurs.

6. Siège (1) selon l'une quelconque des revendications précédentes, **caractérisé en ce que** le siège (1) comporte un dispositif de commande (10) pour la commande du déblocage des fixations (20, 30, 40) en fonction de l'état existant de verrouillage et/ou de déverrouillage.
